Europäisches Patentamt

European Patent Office

Office européen des brevets

(19)

(11) Numéro de publication : **0 104 163**
**B1**

(12) **FASCICULE DE BREVET EUROPÉEN**

(45) Date de publication du fascicule du brevet :
04.03.87

(51) Int. Cl.⁴ : **B 64 C 21/02, B 64 C 27/00, B 64 C 31/02, B 64 D 17/02, B 64 D 19/02**

(21) Numéro de dépôt : 82900964.6

(22) Date de dépôt : 30.03.82

(86) Numéro de dépôt international :
PCT/FR 82/00059

(87) Numéro de publication internationale :
WO/8303395 (13.10.83 Gazette 83/24)

(54) AERONEF SANS MOTEUR.

(43) Date de publication de la demande :
04.04.84 Bulletin 84/14

(45) Mention de la délivrance du brevet :
04.03.87 Bulletin 87/10

(84) Etats contractants désignés :
AT BE CH DE FR GB LI LU NL SE

(56) Documents cités :
FR-A- 449 486
FR-A- 1 422 153
FR-A- 1 523 639
FR-A- 2 055 752
FR-A- 2 240 147
FR-A- 2 251 473
US-A- 2 474 079
US-A- 4 227 665

(73) Titulaire : BICKEL, Robert
21 Place Saint Jean Baptiste Volkrange
F-57100 Thionville (FR)

(72) Inventeur : BICKEL, Robert
21 Place Saint Jean Baptiste Volkrange
F-57100 Thionville (FR)

(74) Mandataire : Nuss, Pierre
10, rue Jacques Kablé
F-67000 Strasbourg (FR)

## Description

La présente invention concerne le domaine de la construction d'aéronefs à voilure tournante ou fixe, et a pour objet un aéronef sans moteur.

Les aéronefs existant actuellement sont généralement rangés sous deux classes, à savoir ceux à voilure tournante, tels que les hélicoptères et les autogires, et ceux à voilure fixe, tels que les avions à moteur ou à réaction et les planeurs.

Dans ces aéronefs connus, la force de sustentation et de translation est assurée par production d'un courant d'air sous la voilure, qui a pour effet de provoquer le soulèvement et le déplacement de l'appareil dans l'air, ce courant d'air étant produit, soit par des hélices en mouvement, soit par déplacement rapide de l'aéronef sous l'effet d'une poussée d'un moteur à réaction, ou analogue. Dans le cas d'un planeur, la sustentation est obtenue par utilisation des courants atmosphériques, ascendants et la translation n'est possible que par l'effet de la gravité.

Ces aéronefs connus sont cependant d'un prix de revient très élevé, incompatible avec une utilisation dans des buts de divertissement, et leur pilotage est relativement complexe. En outre, leurs différentes parties constitutives sont généralement assemblées de manière non démontable, de sorte que leur transport et leur rangement sous forme compacte sont impossibles à réaliser.

Il est également connu, par FR-A-2 251 473 un aéronef sans moteur, qui est essentiellement constitué par un poste de pilotage monté sur un châssis pourvu d'un train d'atterrissage sous forme de roulettes, par une voilure rotative, et par un dispositif de commande de position de ladite voilure rotative. Cependant, dans ce mode de réalisation, un repliage de l'ensemble de l'aéronef avec sa voilure est impossible à réaliser de sorte que son transport éventuel ou son rangement sous un faible volume est impossible à réaliser.

La présente invention a pour but de pallier ces inconvénients.

Elle a, en effet, pour objet un aéronef sans moteur, essentiellement constitué par un poste de pilotage monté sur un châssis muni d'un train d'atterrissage sous forme de roulettes, par une voilure rotative, par un mât de support de la voilure rotative, et par un dispositif de commande de position de la voilure, caractérisé en ce que le châssis est repliable, en ce que la voilure rotative est repliable, est munie de dispositifs de conversion de la résistance de l'air suivant l'effet Coanda et présente une forme circulaire en position déployée et est fixée sur le mât qui est télescopique, par l'intermédiaire d'une rotule portant un flasque auquel sont reliés des éléments articulés, de support de la voilure rotative, dont les parties d'extrémité sont légèrement flexibles et cintrées et sont maintenues en position déployée au moyen de tendeurs reliés chacun au moyen d'un bras à un flasque solidaire d'une rotule de guidage et de commande de position du mât télescopique sur le châssis, et en ce que, afin de permettre une tension équilibrée de la voilure, il est muni de tendeurs reliant des points de la voilure situés au niveau de l'articulation des éléments articulés à un flasque relié à la tête du mât au moyen d'une rotule, ledit mât étant télescopique sur sa partie supérieure comprise entre la rotule et le flasque de tête du mât.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation frontale d'un aéronef conforme à l'invention ;

la figure 2 est une vue partielle en élévation latérale et en coupe suivant la figure 1, la voilure étant en position horizontale ;

la figure 3 est une vue en élévation frontale de l'aéronef en position repliée ;

la figure 4 est une vue en élévation frontale, à plus grande échelle de l'aéronef, la voilure étant à moitié déployée ;

la figure 5 est une vue à plus grande échelle, en élévation latérale du châssis repliable ;

la figure 6 est une vue en plan du châssis de la figure 5 ;

la figure 7 est une vue en élévation latérale du châssis en position repliée ;

la figure 8 est une vue à plus grande échelle, en élévation latérale, du poste de pilotage ;

la figure 9 est une vue en perspective, partiellement en coupe, d'une rotule de commande de position de la voilure ;

la figure 10 représente, en élévation latérale, une biellette télescopique de commande de direction ;

la figure 11 est une vue éclatée en coupe de la rotule de fixation avec possibilité de blocage de l'axe du dispositif de commande de position de la voilure ;

la figure 12 est une vue en perspective, partiellement arrachée, d'une rotule de fixation de la voilure sur le mât télescopique ;

la figure 13 représente, dans une vue analogue à celle de la figure 12 une rotule de tête de mât ;

la figure 14 montre, dans une vue analogue à celles des figures 12 et 13 une rotule du guidage et de commande de position du mât télescopique ;

la figure 15 est une vue analogue à celle de la figure 1 d'une variante de réalisation de l'invention représentant un aéronef à voilure fixe circulaire ;

la figure 16 est une vue en élévation latérale correspondant à la figure 15 ;

la figure 17 montre l'application d'un dispositif de conversion de la résistance de l'air à un aéronef à voilure en forme d'aile, et

la figure 18 est une vue en coupe, à plus grande échelle de l'aile de la figure 17.

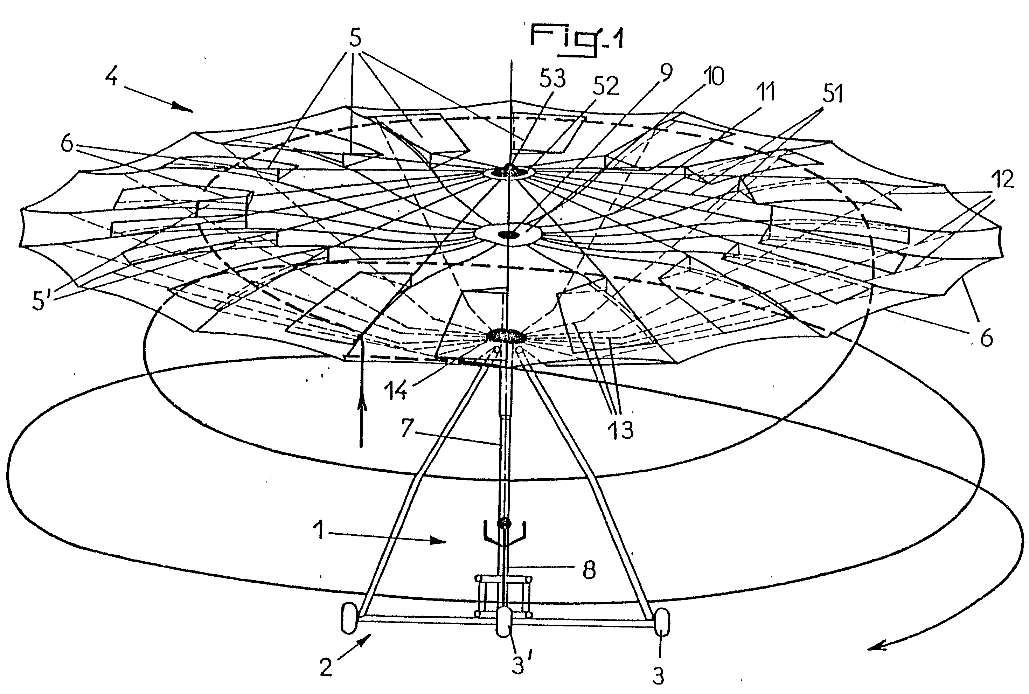

Conformément à l'invention, et comme le montrent plus particulièrement, à titre d'exemple, les figures 1 à 4 des dessins annexés, l'aéronef sans moteur est essentiellement constitué par un poste de pilotage 1 monté sur un châssis repliable 2 muni d'un train d'atterrissage 3 sous forme de roulettes, par une voilure rotative 4 repliable munie de dispositifs 5 de conversion de la résistance de l'air suivant l'effet Coanda, par un mât télescopique 7 de support de la voilure rotative 4 et de modification de la forme de cette dernière, et par un dispositif 8 de commande de position de la voilure 4.

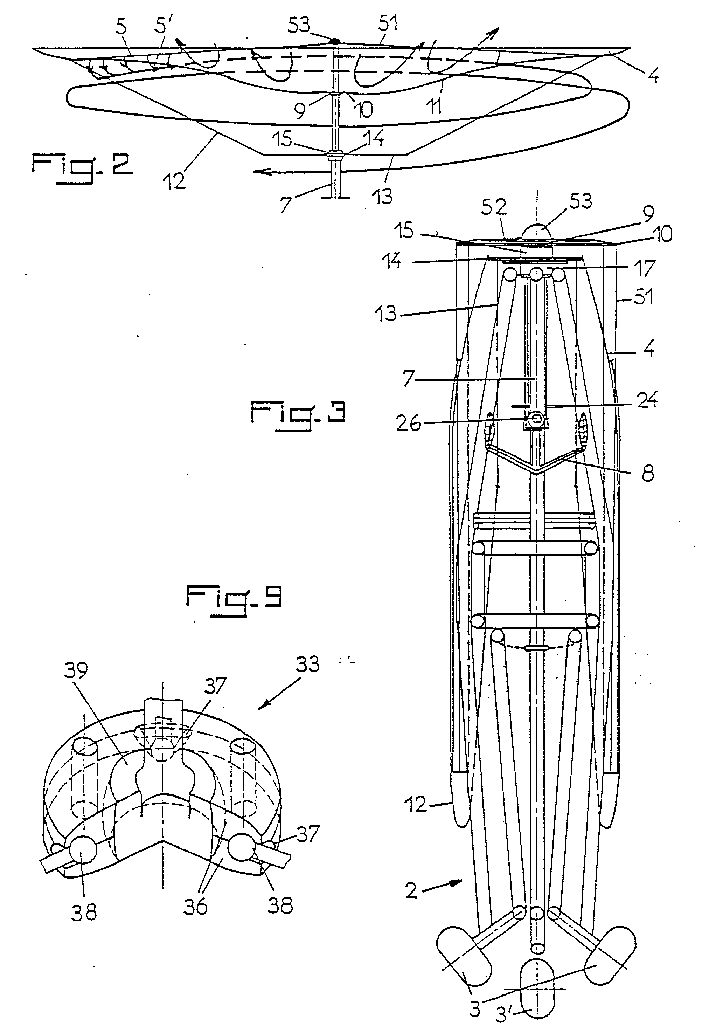

Dans les figures 1 et 2, l'aéronef est représenté avec sa voilure 4 inclinée par rapport à l'horizontale. La voilure 4 présente avantageusement une forme circulaire en position déployée et est fixée sur le mât télescopique 7 par l'intermédiaire d'une rotule 9 portant un flasque 10 auquel sont reliés des éléments articulés 11, dont les parties d'extrémité sont légèrement cintrées et flexibles et sont maintenues en position déployée au moyen de tendeurs 12 reliés chacun au moyen d'un bras 13 à un flasque 14 solidaire d'une rotule 15 de guidage et de commande de position du mât télescopique 7 sur le châssis 2 (figures 2 à 4).

Le train d'atterrissage 3 du châssis 2, qui est sous forme de roulettes solidaires dudit châssis, comporte au moins une roulette directrice 3'.

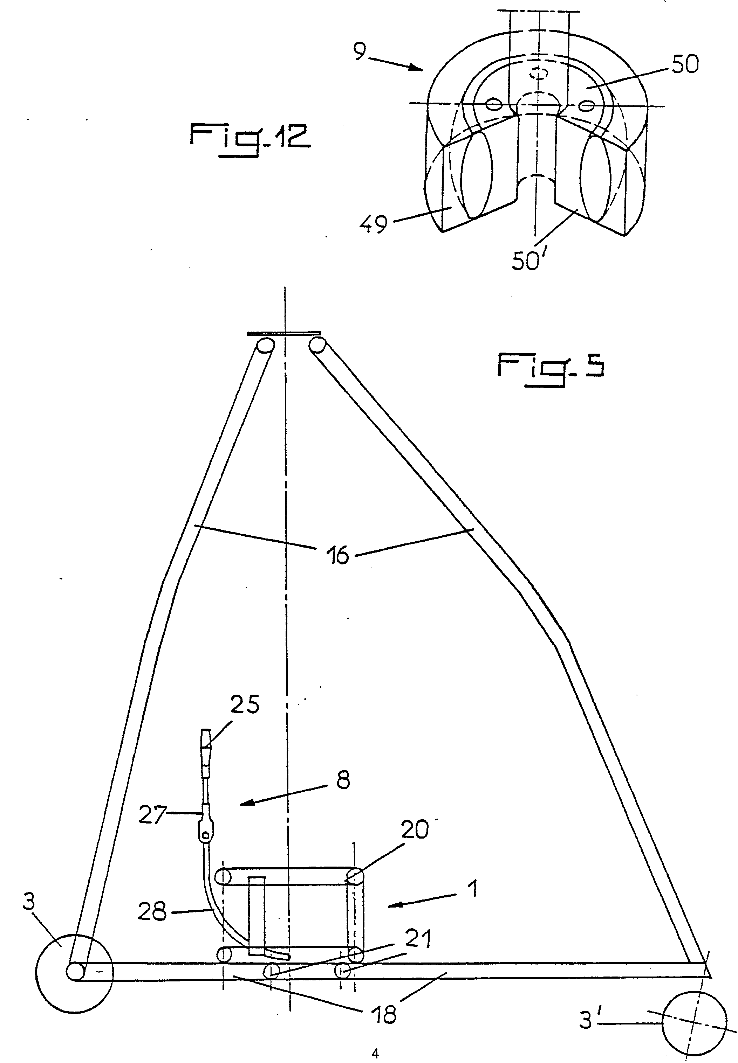

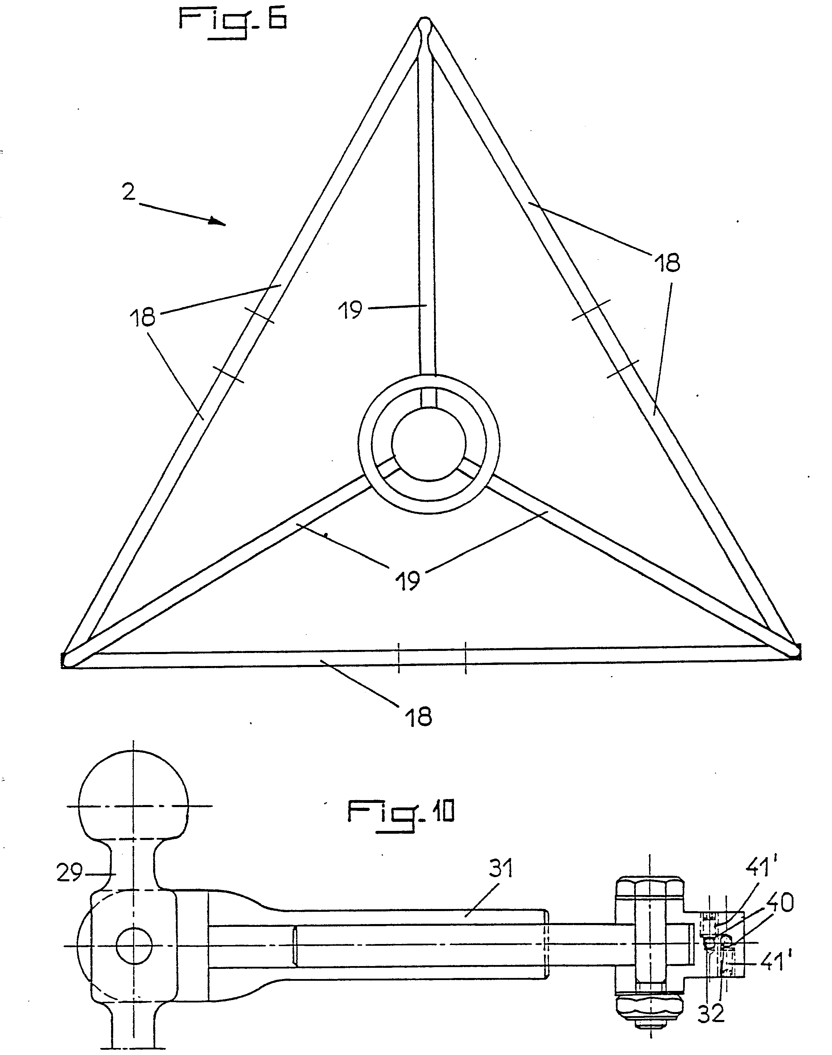

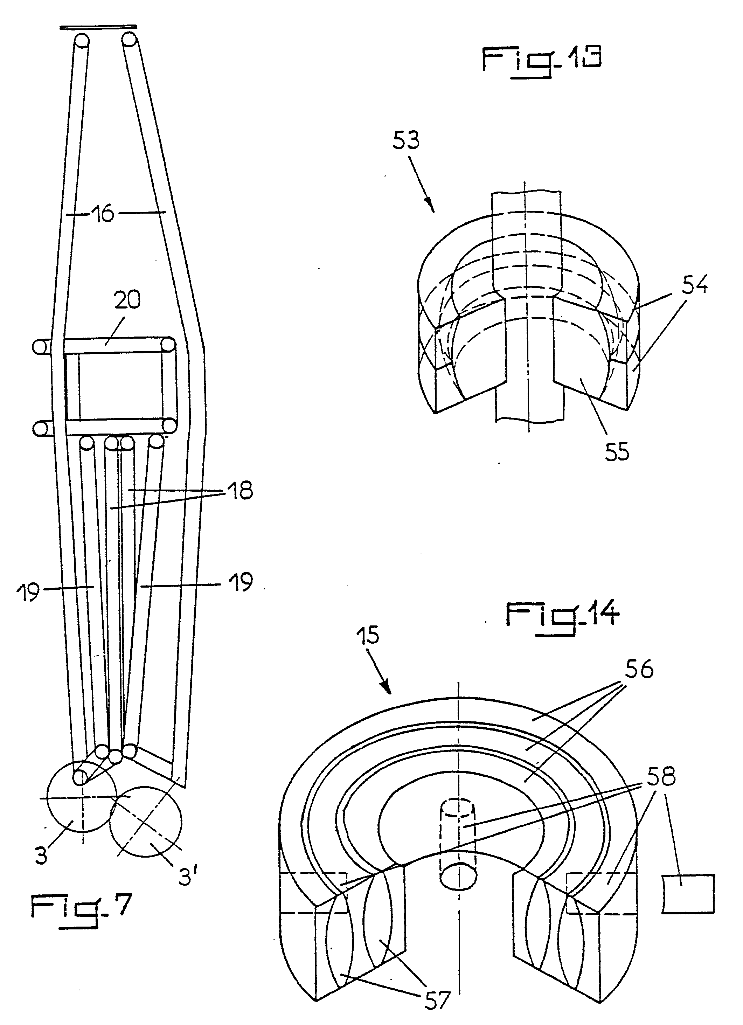

Le châssis repliable 2, représenté plus particulièrement dans les figures 3 à 7, est constitué par des montants 16 montés à articulation, par l'intermédiaire d'un flasque 23, sur une rotule 17 de support du mât télescopique 7, et relié à leur partie inférieure, à articulation, aux points de jonction entre des tirants extérieurs repliables 18 et des tirants intérieurs 19 de support du siège 20 du poste de pilotage 1, le montage de ce siège 20 étant réalisé au moyen d'articulations 21, et le siège 20 étant avantageusement réalisé en éléments tubulaires et muni d'un dossier rabattable 22.

La voilure 4 est équipée de dispositifs 5 de conversion de la résistance de l'air suivant l'effet Coanda, qui consistent en des éléments en coin formant sur l'extrados de la voilure 4 des fentes 5' d'admission de l'air sous l'intrados, et tendant, d'une part, à provoquer sous ce dernier une surpression favorisant la sustentation et éventuellement la translation, et, d'autre part, à créer une dépression sur l'extrados augmentant l'effet de sustentation. La figure 1 montre le cheminement de l'air en rotation sous la voilure 4 après son entrée par les fentes 5' des dispositifs 5, qui forment des conduits aérifères, créant une surpression sous la voilure 4, alors que la partie supérieure en forme de coin a tendance à provoquer une dépression dans la partie centrale, en forme de cuvette de la voilure 4.

Afin d'offrir une bonne résistance à la déformation et à la rupture, la voilure 4 est pourvue aux endroits sensibles constitués par le bord d'attaque et par les dispositifs 5 de tendeurs 6 reliant les extrémités des éléments articulés 11, en renforçant les ouvertures des fentes 5' des dispositifs 5.

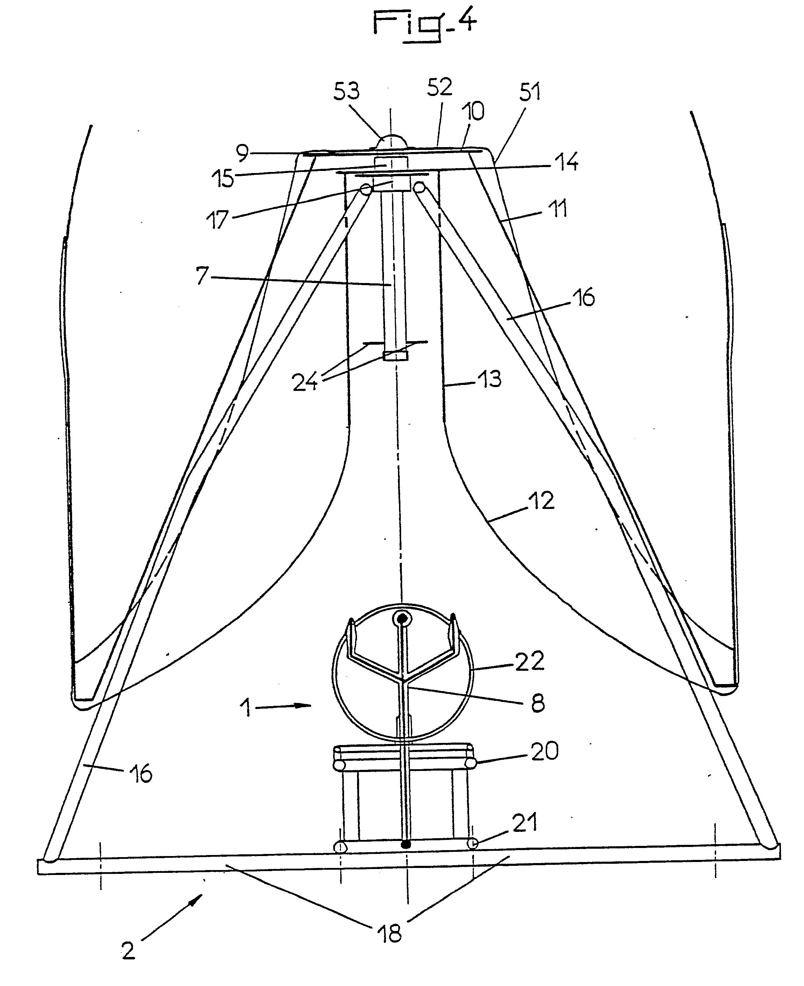

Le mât télescopique 7 (figure 4) porte à son extrémité supérieure la rotule 9 de fixation de la voilure 4, et est guidé en rotation et en translation dans la rotule 15 qui est fixée sur le châssis 2 au moyen de la rotule 17 de support du mât 7. En outre, le mât télescopique 7 est déployable au moyen d'une pompe hydraulique, non représentée, manœuvrée à partir du poste de pilotage 1, et est muni à sa partie inférieure de deux poignées 24 de manœuvre de secours. Ces poignées 24 permettent, en effet, la manœuvre du mât 7 en position, en cas de rupture d'un élément du dispositif de commande 8, qui sera décrit plus loin, de sorte que le pilote peut continuer la navigation.

Le dispositif 8 de commande de position de la voilure 4, représenté à la figure 8, est essentiellement constitué par un manche de commande 25 muni de deux poignées entre lesquelles est fixé un compas magnétique 26, ou analogue, qui est avantageusement couplé avec un dispositif de contrôle de l'inclinaison de la voilure (non représenté), par une pièce 27 de fixation réglable du manche 25 sur une tige courbe 28 solidaire d'un axe 29 monté de manière pivotante dans toutes les directions, au moyen d'une rotule 30 pouvant être bloquée en position, sous le siège 20 du poste de pilotage 1, par une biellette télescopique 31, fixée sur l'axe 29 sous la rotule 30, et à l'extrémité libre de laquelle sont fixés des câbles 32 guidés dans des gaines non représentées et servant à la commande de direction de la roue directrice 3', et par une rotule 33 de commande de position de la voilure 4 montée sur la partie inférieure de l'axe 29, et reliée par l'intermédiaire de câbles sous gaines 34 au flasque 10 solidaire de la rotule 9.

Sous le siège 20 sont, en outre, prévus un réservoir de liquide hydraulique 35 et une pompe hydraulique à commande manuelle destinée au déploiement du mât télescopique 7.

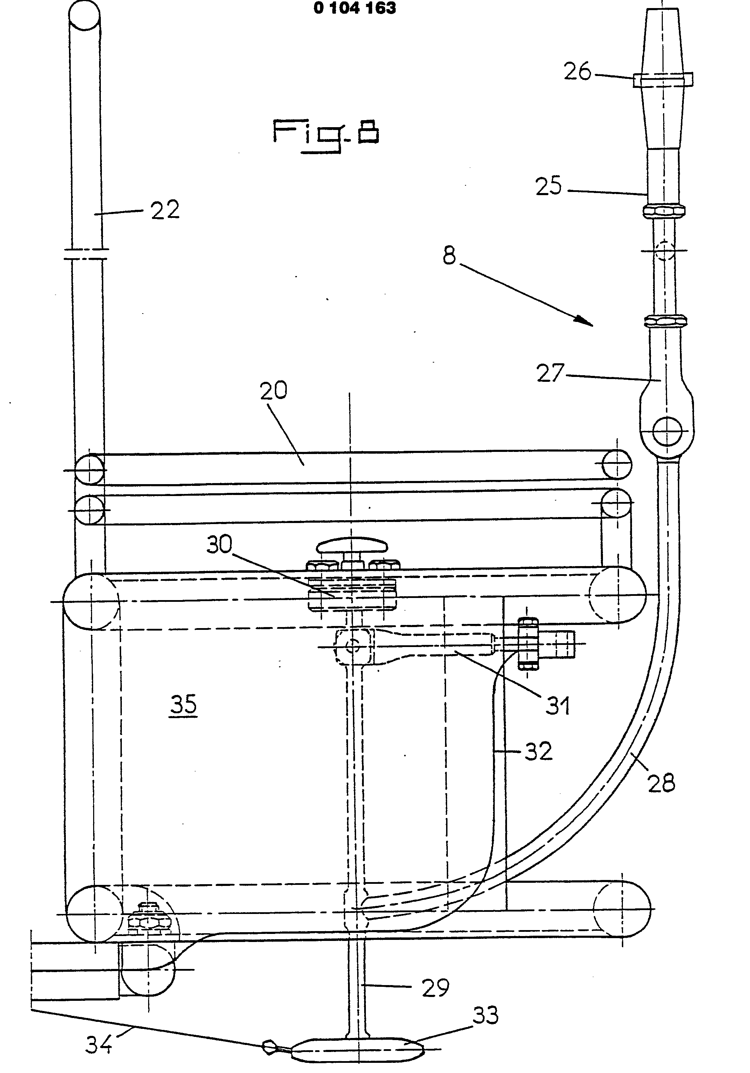

La rotule 33 de commande de position de la voilure 4 (figure 9) est constituée par deux bagues 36 présentant à intervalles réguliers de 120° trois logements de forme triangulaire 37 dont le sommet est sphérique, et qui sont destinés à loger chacun une bille à tenon 38 pour la fixation d'un câble de commande, par un élément sphérique central 39 maintenu entre les bagues 36 et fixé sur l'extrémité inférieure de l'axe 29 au moyen d'une vis, et pas des vis d'assemblage des bagues 36.

Grâce à cette conformation de la rotule 33, les différents câbles de commande du flasque 10 solidaire de la rotule 9 peuvent être actionnés par simple pivotement du dispositif de commande 8, les bagues 36 assemblées entre elles restant dans un plan horizontal sans subir de rotation, en effectuant uniquement des déplacements de translation.

La biellette télescopique 31, représentée à la figure 10, est fixée sur l'axe 29 au moyen d'un boulon et présente à son extrémité libre deux logements 40 pour les extrémités des câbles 32 de commande de direction de la roue 3', ces extrémités étant serrées dans les logements 40 au moyen de vis 41'.

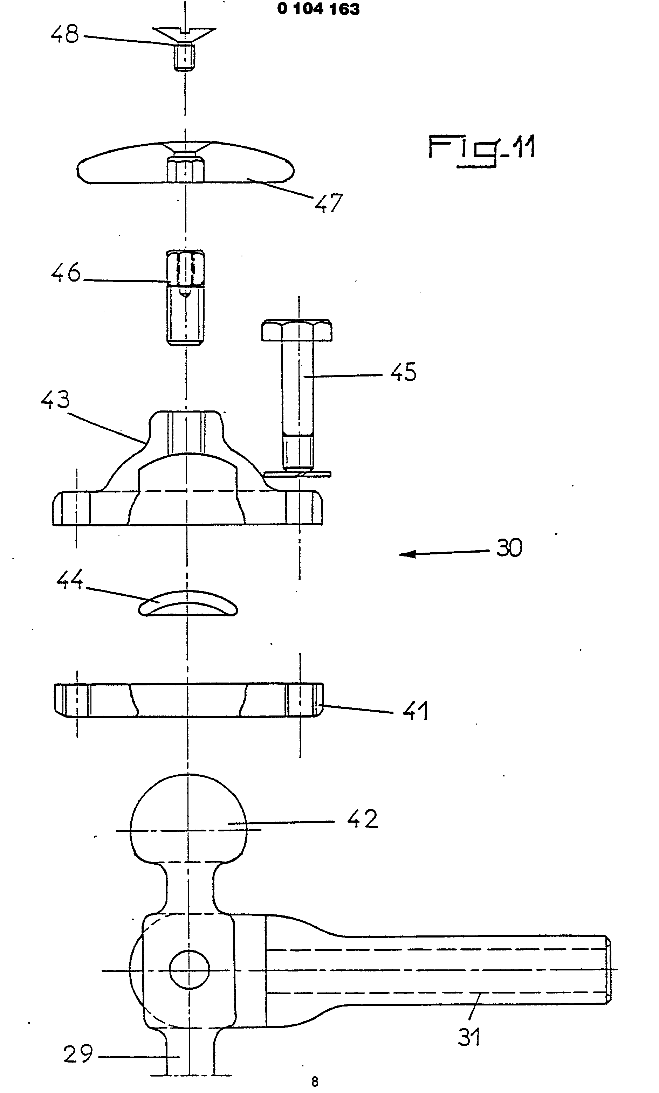

La rotule 30 (figure 11) de fixation de manière pivotante avec possibilité de blocage de l'axe 29 du dispositif 8 sous le siège 20 est constituée par un palier de support 41 logeant la partie inférieure de l'élément sphérique 42 de l'axe 29, par un palier de fermeture 43 muni d'une plaquette de friction 44, par des vis 45 d'assemblage des paliers 41 et 43, et par une vis 46 manœuvrée au moyen d'un bouton 47, ou analogue, auquel elle est reliée par une vis de fixation 48, et qui permet de régler le frottement de la rotule ou de la bloquer en position. Ainsi, par la manœuvre du bouton 47, il est possible de bloquer le dispositif 8 en position, soit en vol pour maintenir une trajectoire donnée et pour permettre au pilote d'avoir d'autres occupations, soit au sol pour maintenir la voilure 4 dans une direction où elle n'offre aucune prise au vent. Grâce à cette rotule 30, il est en outre, possible d'inverser la position du manche 25 et de sa tige 28 pour les amener, par exemple, par une rotation de 180° de l'axe 29, dans une position permettant le pilotage en sens contraire, et dans laquelle la vision est facilitée, la roue directrice 3' et le montant 16 correspondant étant alors placés derrière le pilote.

Le montage du manche 25 sur la tige courbe 28 au moyen de sa pièce de fixation réglable 27 est avantageusement réalisé au moyen d'un élément à crans, non représenté en détail, monté de manière déplaçable, à l'intérieur de la pièce 27, et coopérant avec un secteur denté solidaire de la tige 28. Ainsi, l'utilisateur peut régler la distance du manche 25 au siège 20 à sa convenance.

La rotule 9 (figure 12) de fixation du flasque 10 et de la voilure 4 est constituée par une bague 49 délimitant un logement en forme de tronc de sphère et renfermant trois coquilles 50 à section elliptique s'étendant chacune sur 120°, et par une bague intérieure 50' de montage coulissant sur le mât 7 et de fixation du flasque 10.

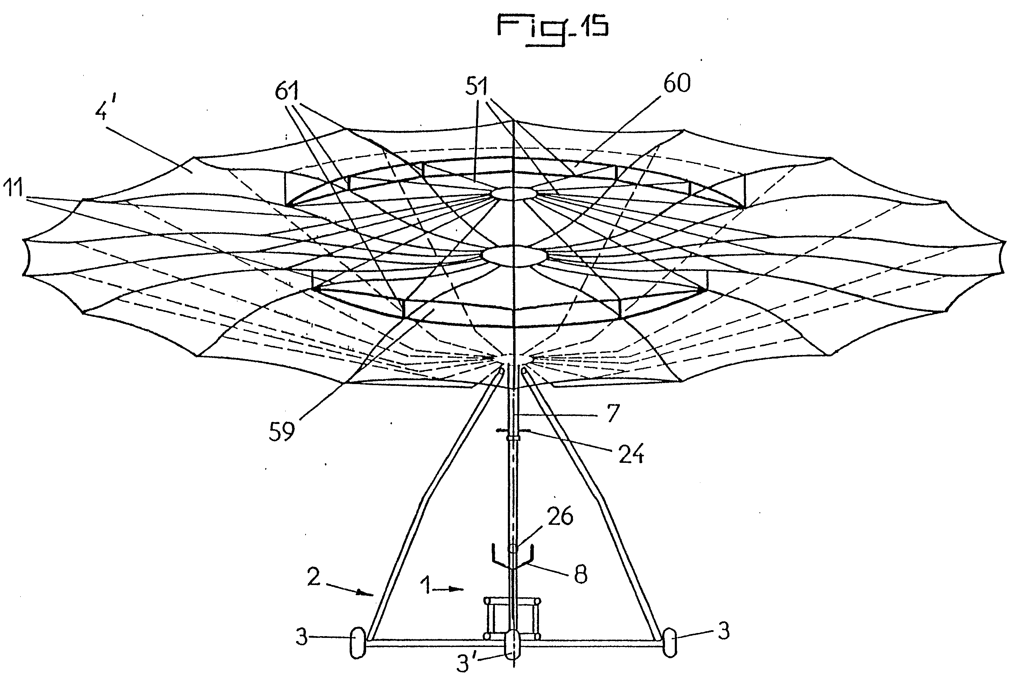

Afin de permettre une tension équilibrée de la voilure 4, l'aéronef est muni, conformément à une autre caractéristique de l'invention, de tendeurs 51 (figures 1 à 4 et 15, 16) reliant des points de la voilure 4 situés au niveau de l'articulation des éléments 11 à un flasque 52 relié à la tête du mât 7 au moyen d'une rotule 53. Une telle rotule 53, représentée à la figure 13, est constituée par deux bagues 54 logeant un élément 55 en forme de tronc de sphère, qui est emmanché sur l'extrémité du mât 7, et par un couvercle (non représenté) fixé sur la bague supérieure 54 et sur le mât télescopique 7.

La rotule 15 de guidage et de commande de position du mât 7 est constituée par trois bagues concentriques 56 délimitant entre elles des logements de section elliptique dans chacun desquels sont insérées trois coquilles 57 de forme correspondante s'étendant chacune sur 120°, et par quatre axes cylindriques 58 disposés entre eux à 90° et reliant par paires diamétralement opposées les bagues 56 externe et médiane, d'une part, et les bagues 56 médiane et interne, d'autre part, de sorte qu'entre chaque jeu de bagues une coquille est montée libre, et que la bague intérieure peut osciller librement de 360° en toutes directions.

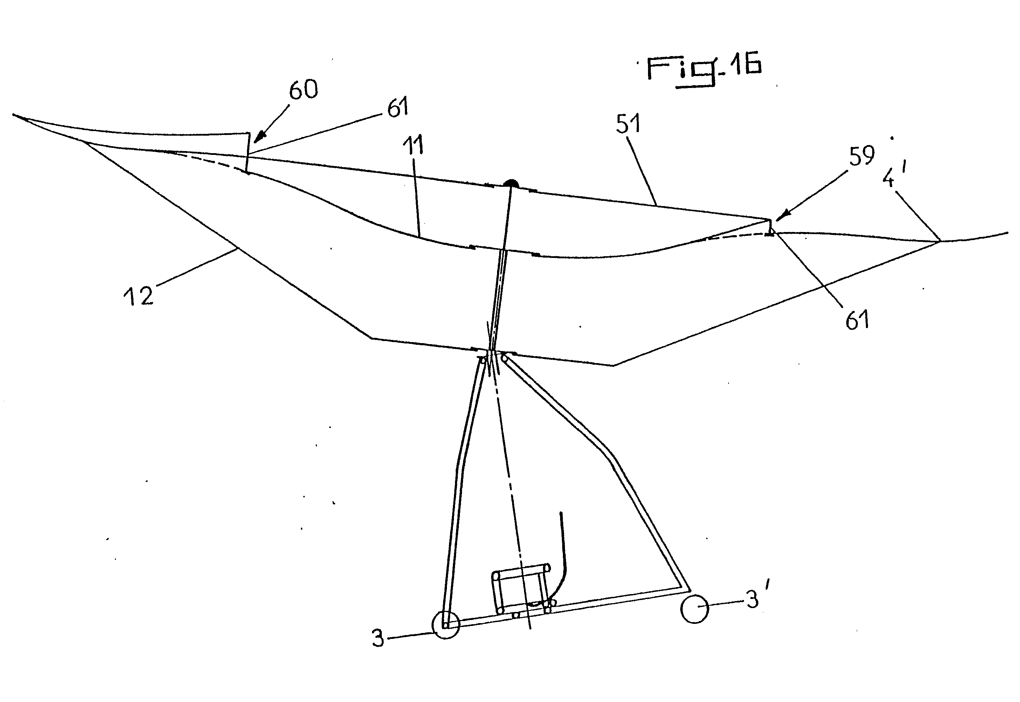

Conformément à une variante de réalisation de l'invention, l'aéronef peut également être équipé d'une voilure circulaire fixe 4'. Dans ce cas, les dispositifs de conversion de la résistance de l'air suivant l'effet Coanda sont constitués par deux orifices 59 et 60 formant des conduits aérifères disposés respectivement sur une portion de la partie avant et sur une portion de la partie arrière de la voilure 4' au niveau de l'articulation des éléments 11, et l'ouverture de ces orifices est assurée grâce à des pattes 61 solidaires des articulations des éléments et coopérant avec les tendeurs 51 (figures 15 et 16).

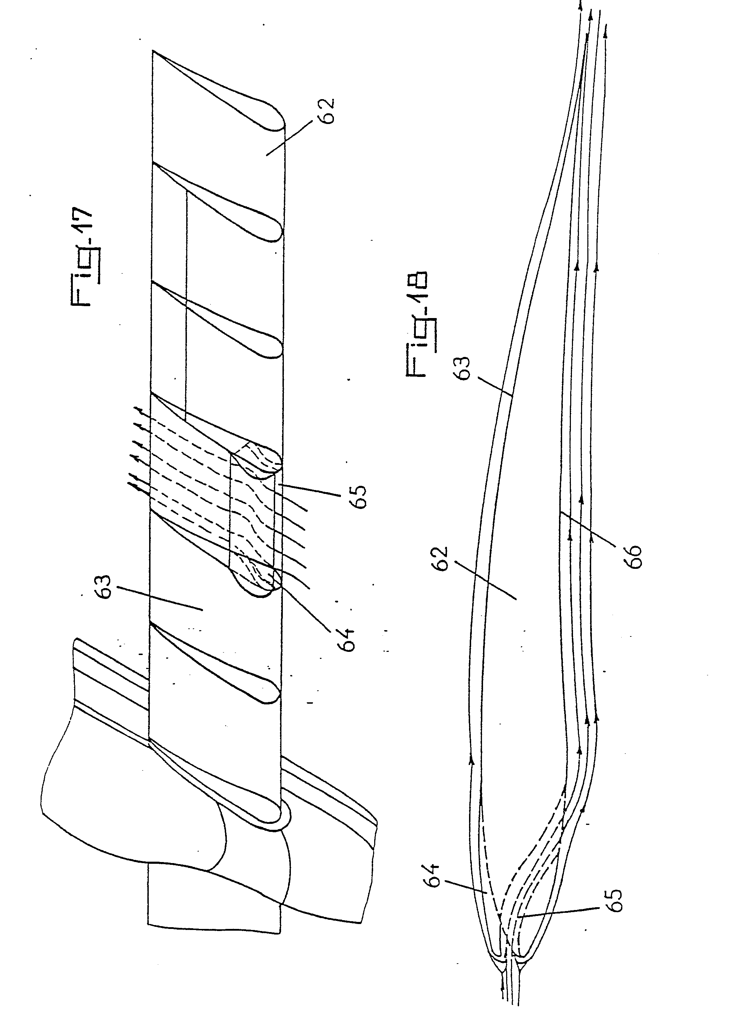

L'invention est également applicable dans le cas de voilures fixes en forme d'ailes, comme le montrent les figures 17 et 18. Conformément à l'invention, le bord d'attaque d'une aile 62 est constitué à sa partie tournée vers l'extrados 63 d'un élément mobile 64 délimitant en position levée par rapport au bord d'attaque un canal 65 sous forme d'un conduit aérifère (figure 18) débouchant sous l'intrados 66, cet élément mobile 64 étant réglable en ouverture par une commande mécanique, électromécanique, ou autre et permettant une conversion de la résistance de l'air suivant l'effet Coanda. Grâce à ce mode de réalisation, les dispositifs d'hypersustentation, les volets d'atterrissage ou autres freins aérodynamiques usuels sur les avions existants peuvent être supprimés, l'élément mobile 64 permettant, soit d'augmenter la sustentation par réglage de l'ouverture proportionnellement à la vitesse de croisière de manière à éliminer la traînée, soit par une augmentation plus importante de l'ouverture combinée avec une réduction de vitesse, de provoquer une hypersustentation analogue à celle obtenue avec les volets d'atterrissage, soit encore de réaliser un freinage à la manière des aérofreins par réalisation d'une ouverture maximale provoquant une dépression sur l'extrados derrière l'élément 64.

L'aéronef conforme à l'invention est entièrement repliable et peut, de ce fait, être facilement transporté et rangé sous un volume très réduit. De même, son montage peut être effectué par simple dépliage des différents organes, et par déploiement du mât télescopique 7 au moyen d'une pompe hydraulique à main, ce déploiement s'effectuant simultanément à celui de la voilure.

Par action sur le dispositif de commande 8, pour réaliser une légère inclinaison du mât 7 avec la voilure 4 dans la direction du vent, les dispositifs 5 de conversion de la résistance de l'air suivant l'effet Coanda provoquent une transformation de la force de translation de cet air en force de sustentation s'exerçant sous l'intrados de la voilure, alors que sur l'extrados de cette dernière s'exerce une dépression, qui a pour effet de soulever l'aéronef. Après décollage, l'augmentation de l'inclinaison de la voilure permet un déplacement en translation proportionnel à la vitesse du vent. Un arrêt, ou un changement de direction peut être effectué par une inclinaison appropriée du dispositif de commande 8 actionnant la voilure 4 au moyen du mât 7.

En cas d'absence de vent, il est possible de faire décoller l'aéronef conforme à l'invention en le soumettant à un courant d'air forcé avantageusement produit par un avion à hélice disposé devant l'aéronef et décollant avec ce dernier pour lui permettre d'atteindre une certaine altitude, la poursuite du vol sans vent s'effectuant alors à la manière de celle d'un planeur.

Grâce à la forme aérodynamique de la voilure 4 équipée des dispositifs 5, l'aéronef conforme à l'invention présente une grande sécurité en cas de défaillance humaine ou de rupture du dispositif de commande 8, la voilure 4 se comportant alors comme un parachute, le pilote étant installé au centre de gravité.

La commande et l'utilisation de l'aéronef conforme à l'invention sont très simples, et un usage sportif à un prix modéré est possible.

**Revendications**

1. Aéronef sans moteur, essentiellement constitué par un poste de pilotage (1) monté sur un châssis (2) muni d'un train d'atterrissage (3) sous forme de roulettes, par une voilure rotative (4), par un mât (7) de support de la voilure rotative (4), et par un dispositif (8) de commande de position de la voilure (4), caractérisé en ce que le châssis (2) est repliable, en ce que la voilure rotative (4) est repliable, est munie de dispositifs (5) de conversion de la résistance de l'air suivant l'effet Coanda et présente une forme circulaire en position déployée et est fixée sur le mât (7), qui est télescopique, par l'intermédiaire d'une rotule (9) portant un flasque (10) auquel sont reliés des éléments articulés (11), de support de la voilure rotative (4), dont les parties d'extrémité sont légèrement flexibles et cintrées et sont maintenues en position déployée au moyen de tendeurs (12) reliés chacun au moyen d'un bras (13) à un flasque (14) solidaire d'une rotule (15) de guidage et de commande de position du mât télescopique (7) sur le châssis (2), et en ce que, afin de permettre une tension équilibrée de la voilure (4), il est muni de tendeurs (51) reliant des points de la voilure (4) situés au niveau de l'articulation des éléments articulés (11) à un flasque (52) relié à la tête du mât (7) au moyen d'une rotule (53), ledit mât (7) étant télescopique sur sa partie supérieure comprise entre la rotule (15) et le flasque (52) de tête de mât (7).

2. Aéronef, suivant la revendication 1, caractérisé en ce que le châssis repliable (2) est constitué par des montants (16) montés à articulation, par l'intermédiaire d'un flasque (23), sur une rotule (17) de support du mât télescopique (7), et relié à leur partie inférieure, à articulation, aux points de jonction entre des tirants extérieurs repliables (18) et des tirants intérieurs (19) de support du siège (20) du poste de pilotage (1), le montage de ce siège (20) étant réalisé au moyen d'articulations (21) et le siège (20) étant avantageusement réalisé en éléments tubulaires et muni d'un dossier rabattable (22).

3. Aéronef, suivant la revendication 1, caractérisé en ce que la voilure (4) est équipée de dispositifs (5) de conversion de la résistance de l'air suivant l'effet Coanda, formant des conduits aérifères, qui consistent en des éléments en coin formant sur l'extrados de la voilure (4) des fentes (5') d'admission de l'air sous l'intrados, et tendant, d'une part, à provoquer sous ce dernier une surpression favorisant la sustentation et éventuellement la translation, et, d'autre part, à créer une pression négative sur l'extrados augmentant l'effet de sustentation.

4. Aéronef, suivant l'une quelconque des revendications 1 et 3, caractérisé en ce que la voilure (4) est pourvue aux endroits sensibles constitués par le bord d'attaque et par les dispositifs (5) de tendeurs (6) reliant les extrémités des éléments articulés (11), et renforçant les ouvertures des fentes (5') des dispositifs (5).

5. Aéronef, suivant l'une quelconque des revendications 1 et 2, caractérisé en ce que le mât télescopique (7) est déployable au moyen d'une pompe hydraulique, manœuvrée à partir du poste de pilotage (1), et est muni à sa partie inférieure de deux poignées (24) de manœuvre de secours.

6. Aéronef, suivant la revendication 1, caractérisé en ce que le dispositif (8) de commande de position de la voilure (4), est essentiellement constitué par un manche de commande (25) muni de deux poignées entre lesquelles est fixé un compas magnétique (26), ou analogue, qui est avantageusement couplé avec un dispositif de contrôle de l'inclinaison de la voilure, par une pièce (27) de fixation réglable du manche (25) sur une tige courbe (28) solidaire d'un axe (29) monté de manière pivotante dans toutes les directions, au moyen d'une rotule (30) pouvant être bloquée en position, sous le siège (20) du poste de pilotage (1), par une biellette télescopique (31), fixée sur l'axe (29) sous la rotule (30), et à l'extrémité libre de laquelle sont fixés des câbles (32) guidés dans des gaines et servant à la commande de direction de la roue directrice (3'), et par une rotule (33) de commande de position de la voilure (4) montée sur la partie inférieure de l'axe (29), et reliée par l'intermédiaire de câbles sous gaines (34) au flasque (10) solidaire de la rotule (9).

7. Aéronef, suivant la revendication 6, caractérisé en ce que sous le siège (20) sont, en outre, prévus un réservoir de liquide hydraulique (35) et une pompe hydraulique à commande manuelle destinée au déploiement du mât télescopique (7) ainsi que de la voilure (4).

8. Aéronef, suivant la revendication 6, caractérisé en ce que la rotule (33) de commande de position de la voilure (4) est constituée par deux bagues (36) présentant à intervalles réguliers de 120° trois logements de forme triangulaire (37) dont le sommet est sphérique, et qui sont destinés à loger chacun une bille à tenon (38) pour la fixation d'un câble de commande, par un élément sphérique central (39) maintenu entre les bagues (36) et fixé sur l'extrémité inférieure de l'axe (29) au moyen d'une vis, et par des vis d'assemblage des bagues (36).

9. Aéronef, suivant la revendication 6, caractérisé en ce que la biellette télescopique (31) est fixée sur l'axe (29) au moyen d'un boulon et présente à son extrémité libre deux logements (40) pour les extrémités des câbles (32) de commande de direction de la roue (3'), ces extrémités étant serrées dans les logements (40) au moyen de vis (41').

10. Aéronef, suivant la revendication 6, caractérisé en ce que la rotule (30) de fixation de manière pivotante avec possibilité de blocage de l'axe (29) du dispositif (8) sous le siège (20) est constituée par un palier de support (41) logeant la partie inférieure de l'élément sphérique (42) de l'axe (29), par un palier de fermeture (43) muni d'une plaquette de friction (44), par des vis (45) d'assemblage des paliers (41) et (43), et par une vis (46) manœuvrée au moyen d'un bouton (47), ou analogue, auquel elle est reliée par une vis de fixation (48), et qui permet de régler le frottement de la rotule ou de la bloquer en position.

11. Aéronef, suivant la revendication 1, caractérisé en ce que la rotule (9) de fixation du flasque (10) et de la voilure (4) est constituée par une bague (49) délimitant un logement en forme de tronc de sphère et renfermant trois coquilles (50) à section elliptique s'étendant chacune sur 120°, et par une bague intérieure (15) de montage coulissant sur le mât (7) et de fixation du flasque (10).

12. Aéronef, suivant la revendication 1, caractérisé en ce que la rotule (53) est constituée par deux bagues (54) logeant un élément (55) en forme de tronc de sphère, qui est emmanché sur l'extrémité du mât (7), et par un couvercle fixé sur la bague supérieure (54) et sur le mât télescopique (7).

13. Aéronef, suivant la revendication 1, caractérisé en ce que la rotule (15) de guidage et de commande de position du mât (7) est constituée par trois bagues concentriques (56) délimitant entre elles des logements de section elliptique dans chacun desquels sont insérés trois coquilles (57) de forme correspondante s'étendant chacune sur 120°, et par quatre axes cylindriques (58) disposés entre eux à 90° et reliant par paires diamétralement opposées les bagues (56) externe et médiane, d'une part, et les bagues (56) médiane et interne, d'autre part, de sorte qu'entre chaque jeu de bagues une coquille est montée libre, et que la bague intérieure peut osciller librement de 360° en toutes directions.

14. Aéronef, suivant la revendication 1, caractérisé en ce qu'il est équipé d'une voilure circulaire fixe (4') et les dispositifs de conversion de la résistance de l'air suivant l'effet Coanda sont constitués par deux orifices (59) et (60) formant des conduits aérifères, disposés respectivement sur une portion de la partie avant et sur une portion de la partie arrière de la voilure (4') au niveau de l'articulation des éléments (11), et l'ouverture de ces orifices est assurée grâce à des pattes (61) solidaires des articulations des éléments (11) et coopérant avec les tendeurs (51).

15. Aéronef, suivant l'une quelconque des revendications 1 et 3, caractérisé en ce que, dans le cas d'application des dispositifs de conversion de la résistance de l'air à des voilures fixes en forme d'ailes, le bord d'attaque d'une aile (62) est constitué à sa partie tournée vers l'extrados (63) d'un élément mobile (64) délimitant en position levée par rapport au bord d'attaque un canal (65) sous forme d'un conduit aérifère débouchant sous l'intrados (66), cet élément mobile (64) étant réglable en ouverture par une commande mécanique, électromécanique, ou autre, et permettant une conversion de la résistance de l'air suivant l'effet Coanda.

## Claims

1. Aircraft without an engine consisting essentially of a piloting device (1) mounted on a frame (2) equipped with landing gear (3) in the form of small wheels, of a rotary aerofoil (4), of a mast (7) to support the rotary aerofoil (4), and of a device (8) for controlling the position of the aerofoil (4), characterised in that the frame (2) can be folded up, in that the rotary aerofoil (4) can be folded up, is equipped with devices (5) for converting the resistance of the air in accordance with the Coanda effect and has a circular shape in the deployed position and is fixed to the mast (7), which is telescopic, by means of a universal joint (9) carrying a flange (10) to which there are connected articulated elements (11) for supporting the rotary aerofoil (4), the end portions of which are slightly flexible and curved and are held in the deployed position by means of tension-rods (12) each connected, by means of an arm (13) to a flange (14) rigidly connected to a universal joint (15) for guiding and controlling the position of the telescopic mast (7) on the frame (2), and in that, in order to permit a stable tension of the aerofoil (4), it is equipped with tension rods (51) connecting points of the aerofoil (4) situated at the level of the articulation of the articulated elements (11) to a flange (52) connected to the head of the mast (7) by means of a universal joint (53), said mast (7) being telescopic over its upper portion comprised between the universal joint (15) and the flange (52) of the masthead (7).

2. Aircraft, according to claim 1, characterised in that the folding undercarriage (2) consists of legs (16), articulately mounted, by means of a flange (23), on a universal joint (17) for supporting the telescopic mast (7) and articulately connected, at their lower portion, to the junction points between outer folding tie rods (18) and inner tie rods (19) for support of the seat (20) of the piloting device (1), the mounting of this seat (20) being effected by means of articulations (21) and the seat (20) being advantageously made of tubular elements and equipped with a reclining back (22).

3. Aircraft, according to claim 1, characterised in that the aerofoil (4) is equipped with devices (5) for converting the resistance of the air in accordance with the Coanda effect, forming air passages, which consist of wedge-shaped elements forming on the upper surface of the aerofoil (4) slots (5') for admission of the air below the under surface, and tending, on the one hand, to cause under the latter a high pressure encouraging the lift and possibly the translation and, on the other hand, to create a negative pressure on the upper surface augmenting the lift effect.

4. Aircraft, according to any one of the claims 1 and 3, characterised in that the aerofoil (4) is provided at the sensitive regions constituted by the leading edge and by the devices (5) with tension rods (6) connecting the ends of the articulated elements (11), and reinforcing the openings of the slots (5') of the devices (5).

5. Aircraft, according to any one of the claims 1 and 2, characterised in that the telescopic mast (7) is deployable by means of a hydraulic pump, operated from the piloting device (1), and is equipped at its lower portion with two handles (24) to assist manœuvring.

6. Aircraft, according to claim 1, characterised in that the device (8) for controlling the position of the aerofoil (4), is essentially constituted by a control stick (25) equipped with two handles between which there is fixed a magnetic compass (26), or the like, which is advantageously coupled to a device for controlling the inclination of the aerofoil, by a member (27) for adjustably fixing the stick (25) to a curved rod (28) rigidly connected to a spindle (29) mounted for pivoting in all directions, by means of a universal joint (30) which can be locked in position, under the seat (20) of the piloting device (1), by a small telescopic rod (31), fixed to the spindle (29) below the universal joint (30), and to the free end of which there are fixed cables (32) guided in sheaths and serving to control the direction of the track wheel (3'), and by a universal joint (33) for controlling the position of the aerofoil (4) mounted on the lower portion of the spindle (29), and connected by means of sheathed cables (34) to the flange (10) rigidly connected to the universal joint (9).

7. Aircraft, according to claim 6, characterised in that under the seat (20) are, moreover, provided a reservoir of hydraulic fluid (35) and a manually controlled hydraulic pump intended for the deployment of the telescopic mast (7) as well as that of the aerofoil (4).

8. Aircraft, according to claim 6, characterised in that the universal joint (33) for controlling the position of the aerofoil (4) is constituted by two rings (36) having at regular intervals of 120° three seatings of triangular shape (37) the apex of which is spherical, and each of which is adapted to accommodate a ball with a peg (38) for the attachment of a control cable, by a central spherical element (39) held between the rings (36) and fixed to the lower end of the spindle (29) by means of a screw, and by screws for assembling the rings (36).

9. Aircraft, according to claim 6, characterised in that the small telescopic rod (31) is fixed to the spindle (29) by means of a bolt and has at its free end two seatings (40) for the ends of the cables (32) for controlling the direction of the wheel (3'), these ends being held in the seatings (40) by means of screws (41').

10. Aircraft, according to claim 6, characterised in that the universal joint (30) for fixing the spindle (29) of the device (8) below the seat (20) in a pivoting manner with the possibility of locking, is constituted by a supporting bearing (41) accommodating the lower portion of the spherical element (42) of the spindle (29), by a closing bearing (43) equipped with a friction insert (44), by screws (45) for assembling the bearings (41) and (43), and by a screw (46) operated by means of a knob (47), or the like, to which it is connected by a locking screw (48), and which permits the friction of the universal joint to be adjusted or the joint to be locked in position.

11. Aircraft, according to claim 1, characterised in that the universal joint (9) for fixing the flange (10) and the aerofoil (4) is constituted by a ring (49) defining a seating in the form of a truncated sphere and enclosing three shells (50) with an elliptical section each extending over 120°, and by an inner ring (15) for mounting so as to slide on the mast (7) and for fixing the flange (10).

12. Aircraft according to claim 1, characterised in that the universal joint (53) is constituted by two rings (54) accommodating an element (55) in the form of a truncated sphere, which is fixed to the end of the mast (7), and by a cover fixed to the upper ring (54) and to the telescopic mast (7).

13. Aircraft, according to claim 1, characterised in that the universal joint (15) for guiding and controlling the position of the mast (7) is constituted by three concentric rings (56) defining between them seatings of elliptical section in each of which there are inserted three shells (57) of corresponding shape each extending over 120°, and by four cylindrical pins (58) disposed at 90° apart and connecting in diametrically opposite pairs the outer and central rings (56), on the one hand, and the central and inner rings (56), on the other hand, in such a manner that a shell is mounted free between each set of rings, and that the inner ring can oscillate freely through 360° in all directions.

14. Aircraft, according to claim 1, characterised in that it is equipped with a fixed circular aerofoil (4') and the devices for converting the resistance of the air in accordance with the Coanda effect are constituted by two orifices (59) and (60) forming air passages, disposed respectively in a portion of the front part and in a portion of the rear part of the aerofoil (4') at the level of the articulation of the elements (11), and the opening of these orifices is ensured by lugs (61) rigidly connected to the articulations of the elements (11) and co-operating with the tension rods (51).

15. Aircraft, according to any one of claims 1 and 3, characterised in that, in the case of the application of the devices for the conversion of the resistance of the air to fixed aerofoils in the form of wings, the leading edge of a wing (62) consists at its portion turned towards the upper surface (63) of a movable element (64) defining in its raised position in relation to the leading edge a duct (65) in the form of an air passage emerging below the lower surface (66), the opening of this movable element (64) being adjustable by a mechanical, electromechanical, or other, control and permitting a conversion of the resistance of the air in accordance with the Coanda effect.

**Patentansprüche**

1. Motorloses Luftfahrzeug, im wesentlichen bestehend aus einem Cockpit (1), das auf einem mit einem Fahrwerk (3) in Form von Laufrädern versehenen Chassis (2) montiert ist, aus einem rotierenden Tragwerk (4), aus einem Mast (7) zur Abstützung des rotierenden Tragwerks (4), und aus einer Vorrichtung (8) zur Positionsregelung des rotierenden Tragwerks (4), dadurch gekennzeichnet, daß das Chassis (2) einklappbar ist, daß das rotierende Tragwerk (4) einklappbar, mit Vorrichtungen (5) zur Umkehrung des Luftwiderstandes nach dem Coanda-Effekt versehen ist und in der ausgefahrenen Position eine kreisrunde Form aufweist, und an dem Mast (7), der teleskopisch ist, mit Hilfe eines Kugelgelenks (9) befestigt wird, das einen Flansch (10) trägt, mit dem gelenkige Elemente (11), zur Unterstützung des rotierenden Tragwerks (4) verbunden sind, deren Endteile leicht beweglich und gekrümmt sind und in ausgefahrener Position mit Hilfe von Spanngliedern (12) gehalten werden, die jeweils über einen Arm (13) mit einem an einem Kugelgelenk (15), zur Lenkung und Positionsregelung des Teleskopmastes (7) auf dem Chassis (2), festsitzenden Flansch (14) verbunden sind, und dadurch, daß, um eine ausgeglichene Spannung des Tragwerks (4) zu ermöglichen, er mit Spanngliedern (51) versehen ist, welche in Höhe der Gelenkverbindung der gelenkigen Elemente (11) liegende Punkte des Tragwerks (4) mit einem Flansch (52) verbinden, der mit der Spitze des Mastes (7) mittels eines Kugelgelenks (53) verbunden ist, wobei der besagte Mast (7) an seinem zwischen dem Kugelgelenk (15) und dem Flansch (52) der Spitze des Mastes (7) liegenden oberen Teil teleskopisch ist.

2. Luftfahrzeug nach Anspruch 1, dadurch gekennzeichnet, daß das einklappbare Chassis (2) aus Stützen (16), die mit Hilfe eines Flansches (23), gelenkig an einem Kugelgelenk (17) zur Abstützung des Teleskopmastes (7) montiert sind, besteht, und an ihrem Unterteil gelenkig mit Verbindungsstellen zwischen äußeren, einklappbaren Streben (18) und inneren Streben (19) zur Unterstützung des Sitzes (20) des Cockpits (1), verbunden sind, wobei die Montage dieses Sitzes (20) mit Hilfe von Gelenken (21) erfolgt und der Sitz (20) vorteilhaft aus Rohrelementen ausgeführt wird und mit einer umklappbaren Rückenlehne (22) versehen ist.

3. Luftfahrzeug nach Anspruch 1, dadurch gekennzeichnet, daß das Tragwerk (4) mit Luftführungen bildenden Vorrichtungen (5) zur Umkehrung des Luftwiderstands nach dem Coanda-Effekt ausgestattet ist, die aus keilförmigen Elementen bestehen, welche auf der Flügeloberseite des Tragwerks (4) Schlitze (5') für den Einlaß der Luft unter die Flügelunterseite bilden, und, einerseits, dazu streben, unter der letzteren einen den Auftrieb und eventuell die Translation begünstigenden Überdruck zu erzeugen, und andererseits, um einen den Auftriebseffekt erhöhenden, negativen Druck auf der Flügeloberseite zu schaffen.

4. Luftfahrzeug nach einem der Ansprüche 1 und 3, dadurch gekennzeichnet, daß das Tragwerk (4) an den empfindlichen Stellen, bestehend aus der Flügelvorderkante und den Vorrichtungen (5), mit die Enden der gelenkigen Elemente (11) verbindenden und das Öffnen der Schlitze (5') der Vorrichtungen (5) verstärkenden Spanngliedern (6) versehen ist.

5. Luftfahrzeug nach einem der Ansprüche 1 und 2, dadurch gekennzeichnet, daß der Teleskopmast (7) mittels einer vom Cockpit (1) aus betätigten, hydraulischen Pumpe ausfahrbar, und an seinem unteren Teil mit zwei Handgriffen (24) zur Notbedienung versehen ist.

6. Luftfahrzeug nach Anspruck 1, dadurch gekennzeichnet, daß die Vorrichtung (8) zur Positionsregelung des Tragwerks (4) im wesentlichen aus einem mit zwei Handgriffen versehenen Steuerknüppel (25), zwischen welchen ein Magnetkompaß (26) oder ähnliches befestigt ist, der vorteilhaft mit einer Kontrollvorrichtung für die Schrägstellung des Tragwerks gekoppelt ist, aus einem Stück (27) zur regulierbaren Befestigung des Knüppels (25) auf einem gebogenen Schaft (28), der mit einer Achse (29) verankert ist, welche mittels eines Kniegelenks (30), das in Position arretiert werden kann, unter dem Sitz (20) des Cockpits (1) in alle Richtungen schwenkbar montiert ist, aus einem Teleskopschwingarm (31), der auf Achse (29) unter dem Kugelgelenk (30) befestigt ist, und an dessen freiem Ende Seile (32) befestigt sind, die in Hüllrohren geführt werden und zur Richtungslenkung des Bugrads (3') dienen, und aus einem Kugelgelenk (33) zur Positionsregelung des Tragwerks (4), das an das Unterteil der Achse (29) montiert, und über Seilzüge (34) mit dem mit dem Kugelgelenk (9) verankerten Flansch (10) verbunden ist, besteht.

7. Luftfahrzeug nach Anspruch 6, dadurch gekennzeichnet, daß unter dem Sitz (20) außerdem ein Behälter für Hydraulikflüssigkeit (35) und eine handbediente Hydraulikpumpe zum Ausfahren des Teleskopmastes (7) sowie des Tragwerks (4) vorgesehen sind.

8. Luftfahrzeug nach Anspruch 6, dadurch gekennzeichnet, daß das Kugelgelenk (33) zur Positionsregelung des Tragwerks (4) aus zwei Ringen (36), die in regelmäßigen Abständen von 120° drei dreieckige Aufnahmen (37) aufweisen, deren Spitze kugelförmig ist, und die dazu dienen, jeweils eine Kugel mit Zapfen (38) zur Befestigung eines Steuerseils aufzunehmen, aus einem zentralen, kugelförmigen Element (39), das zwischen den Ringen (36) festgehalten und an dem unteren Ende der Achse (29) mittels einer Schraube befestigt wird, und aus Schrauben für die Montage der Ringe (36), besteht.

9. Luftfahrzeug nach Anspruch 6, dadurch gekennzeichnet, daß der Teleskopschwingarm (31) auf der Achse (29) mittels eines Bolzens befestigt ist und an seinem freien Ende zwei Aufnahmen (40) für die Enden der Seile (32) zur Richtungslenkung des Rades (3') aufweist, wobei diese Enden in den Aufnahmen (40) mit Hilfe von Schrauben (41') festgeklemmt sind.

10. Luftfahrzeug nach Anspruch 6, dadurch gekennzeichnet, daß das Kugelgelenk (30) zur schwenkbaren Befestigung mit Arretiermöglichkeit der Achse (29) der Vorrichtung (8) unter dem Sitz (20) aus einem Stützlager (41), welches den unteren Teil des kugelförmigen Elements (42) der Achse (29) aufnimmt, aus einem mit einem Reibungsplättchen (44) versehenen Endlager (43), aus Schrauben (45) für den Zusammenbau der Lager (41) und (43), und aus einer Schraube (46), die mittels eines Knopfes (47) oder ähnlichem, mit welchem sie durch eine Befestigungsschraube (48) verbunden ist, betätigt wird, und welche ermöglicht, die Reibung des Kugelgelenks einzustellen, oder es in einer Position zu arretieren, besteht.

11. Luftfahrzeug nach Anspruch 1, dadurch gekennzeichnet, daß das Kugelgelenk (9) zur Befestigung des Flansches (10) und des Tragwerks (4) aus einem Ring (49), der eine Aufnahme in Form eines Kugelstumpfs umgrenzt und drei sich jeweils auf 120° erstreckende Kokillen (50) mit elliptischem Querschnitt einschließt, und aus einem inneren Ring (15) zur gleitbaren Montage des Mastes (7) und Befestigung des Flansches (10), besteht.

12. Luftfahrzeug nach Anspruch 1, dadurch gekennzeichnet, daß das Kugelgelenk (53) aus zwei Ringen (54), welche ein kegelstumpfförmiges Element (55) aufnehmen, das auf das Ende des Mastes (7) aufgesteckt, und aus einem Deckel, der auf dem oberen Ring (54) und auf dem Teleskopmast (7) befestigt ist, besteht.

13. Luftfahrzeug nach Anspruch 1, dadurch gekennzeichnet, daß das Kugelgelenk (15) zur Lenkung und Positionsregelung des Mastes (7) aus drei konzentrischen Ringen (56), die zueinander Aufnahmen mit elliptischem Querschnitt abgrenzen, in welchen jeweils drei sich je über 120° erstreckende Kokillen (57) entsprechender Form eingesetzt sind, und aus vier zylindrischen, im Verhältnis zueinander bei 90° angeordneten Achsen (58), und paarweise, diametral gegenüberliegend den äußeren und mittleren Ring (56), einerseits, und den mittleren und inneren Ring (56), andererseits, verbinden, so daß zwischen jedem Satz Ringe eine Kokille frei beweglich ist, und daß der innere Ring frei um 360° in alle Richtungen schwingen kann, besteht.

14. Luftfahrzeug nach Anspruch 1, dadurch gekennzeichnet, daß es mit einem kreisrunden, starren Tragwerk (4') ausgestattet ist, und die Vorrichtungen zur Umkehrung des Luftwiderstands nach dem Coanda-Effekt aus zwei, Luftführungen bildenden Öffnungen (59) und (60) bestehen, die an einem Teil des Vorderteils bzw. an einem Teil des Hinterteils des Tragwerks (4') in Höhe der Gelenkverbindung der Elemente (11) angeordnet sind, und das Aufgehen dieser Öffnungen durch mit den Gelenken der Elemente (11) fest verbundenen und mit den Spanngliedern (51) zusammenwirkenden Klammern (61) gewährleistet ist.

15. Luftfahrzeug nach einem der Ansprüche 1 und 3, dadurch gekennzeichnet, daß beim Anbringen der Vorrichtungen zur Umkehrung des Luftwiderstandes an starren Tragwerken in Form von Flügeln, die Vorderkante eines Flügels (62) an seinem der Flügeloberseite (63) zugekehrten Teil aus einem beweglichen Element (64) gebildet ist, das in Hubstellung im Verhältnis zur Vorderkante einen Kanal (65) in Form einer Luftführung umgrenzt, die unter der Flügelunterseite (66) mündet, wobei dieses bewegliche Element (64) beim Öffnen durch eine mechanische, elektromechanische oder andere Steuerung regulierbar ist und eine Umkehrung des Luftwiderstandes nach dem Coanda-Effekt ermöglicht.

Fig-1

0 104 163

Fig.2

Fig.3

Fig.9

# Fig. 4

0 104 163

Fig. 12

Fig. 5

9

50

49

50'

16

25

8

27

28

3

20

1

21

18

3'

4

0 104 163

Fig. 6

2

18

19

18

18

19

18

Fig. 10

29

31

41'

41'

40

41'

32

5

**Fig. 13**

53

54

55

**Fig. 14**

15

56

58

57

**Fig. 7**

16

20

18

19   19

3

3'

0 104 163

## Fig.8

22 · 20 · 30 · 35 · 31 · 32 · 28 · 8 · 25 · 26 · 27 · 29 · 33 · 34

7

Fig. 11

48

47

46

45

43

30

44

41

42

31

29

8

Fig.15

0 104 163

Fig.16

0 104 163

Fig.17

Fig.18